# EUROPÄISCHE PATENTSCHRIFT

(11) **EP 1 430 745 B1**
(45) Veröffentlichungstag und Bekanntmachung des Hinweises auf die Patenterteilung: **13.04.2005**
(21) Anmeldenummer: 02776709.4
(22) Anmeldetag: 24.09.2002
(51) Int. Cl.: H04Q 11/00, H04Q 11/04, H04L 12/56

(54) **VORRICHTUNG UND VERFAHREN ZUR VERMITTLUNG EINER MEHRZAHL VON SIGNALEN UNTER VERWENDUNG EINER MEHRSTUFIGEN PROTOKOLLVERARBEITUNG**
DEVICE AND METHOD FOR TRANSMITTING A PLURALITY OF SIGNALS BY MEANS OF MULTI-STAGE PROTOCOL PROCESSING
DISPOSITIF ET PROCEDE POUR TRANSMETTRE UNE PLURALITE DE SIGNAUX AU MOYEN D'UN TRAITEMENT DE PROTOCOLE A PLUSIEURS NIVEAUX

(30) Priorität: 27.09.2001 DE 10147750
(43) Veröffentlichungstag der Anmeldung: 23.06.2004
(73) Patentinhaber: SIEMENS AKTIENGESELLSCHAFT, 80333 München (DE)
(72) Erfinder: KIRSTÄDTER, Andreas, 85560 Ebersberg (DE); GRIMMINGER, Jochen, 80638 München (DE)
(86) Internationale Anmeldenummer: PCT/DE2002/003593
(87) Internationale Veröffentlichungsnummer: WO 2003/030582

(56) Entgegenhaltungen:
- EP-A- 0 944 288
- EP-A- 1 073 306
- EP-A- 1 091 529
- WO-A-01/67694

## Beschreibung

Die Erfindung betrifft ein Verfahren und eine Vorrichtung zur Vermittlung einer Mehrzahl von paket-orientierten Signalen.

Bei solchen Datennetzwerken ist es erforderlich, die Daten in Form von Datenpaketen von einer Quelle zu einem Ziel zu führen. Dazu ist ein entsprechendes Vermittlungssystem erforderlich. In den letzten Jahren ist die Übertragungskapazität bzw. die Datenübertragungsrate in Netzwerken stark angestiegen, so dass auch die Anforderungen an diese Vermittlungssysteme stetig stiegen. Dies führte zur Notwendigkeit, Vermittlungseinrichtungen, insbesondere Switches und Router, zu entwickeln, die einen Datendurchsatz im Multi-Gigabit- bzw. sogar Terabit-Bereich aufweisen. Bei derart hohen Übertragungsgeschwindigkeiten lassen sich die erforderlichen Netzwerkprotokolle nur noch als Hardware realisieren, um die notwendigen Antwortzeiten realisieren zu können.

Vermittlungseinrichtungen für diese hohen Übertragungsgeschwindigkeiten werden nach einer Möglichkeit unter Verwendung einer aktiven Backplane realisiert. Hier werden vor allem Crossbar-Architekturen eingesetzt, die vollständig parallel arbeiten, so dass der Durchsatz derartiger Einrichtungen von der Geschwindigkeit der Schaltvorgänge des Crossbar, der Anzahl der einzelnen Ports und dem intern verwendeten Kommunikationsprotokoll begrenzt ist.

Crossbar-Architekturen arbeiten üblicherweise mit mehreren Port-Chips zusammen, die über Interfaces mit einem zentralen Crossbar-Chip verbunden sind. Bekannte Crossbar-Chips beinhalten üblicherweise Pufferspeicher, um bei auftretenden Kollisionen Pakete oder Zellen zwischenzuspeichern.

Weitere Bestandteile der Vermittlungseinrichtungen sind Contention-Resolution-Einheiten (Zellkonflikt-Auflösungseinheiten), die den Verkehr zwischen den einzelnen Ports regeln, falls ein Port von mehreren anderen Ports Daten empfangen soll. Aus den Druckschriften DE 19935127 und DE 19935126, sowie ihren Verweisen, kann entnommen werden, wie solche Zellkonflikte aufgelöst werden können.

Ein weiterer Bestandteil von Vermittlungssystemen sind Pufferspeicher, die erforderlich sind, um Spitzen in der Übertragungsrate bei Systemen mit variabler Datenübertragungsrate - beispielsweise Systemen, bei denen verschiedene Dienste auf denselben Leitungen übertragen werden - abfangen zu können. Weiterhin arbeiten Protokollverarbeitungseinheiten bzw. entsprechende Chips auf diesem Pufferspeicher, die den nächsten Port ermitteln, an den das Informationspaket bzw. die Zelle zu übermitteln ist. Die Protokollverarbeitungseinheiten bestimmen anhand des Headers und entsprechender Tabellen, an wen das Paket bzw. die Zelle weitergeleitet werden muss. So kann es für eine Multiprotokollumgebung mehrere Tabellen geben, die für die Verarbeitung von z. B. ATM, MPLS und IP Protokolle herangezogen werden müssen.

Nachteilig bei diesen bekannten Systemen ist der relativ hohe Realisierungsaufwand, da praktisch die gesamten Protokollmechanismen wegen der hohen Übertragungsgeschwindigkeit als Hardware realisiert werden müssen. Insbesondere das Vorsehen von Pufferspeichern und zugehörigen Hochgeschwindigkeitsübertragungswegen für die interne Datenübertragung von und zu den Pufferspeichern führt zu einem beträchtlichen Teil des Gesamtaufwands bei der Realisierung von derartigen Vermittlungseinrichtungen.
Die meisten der auf dem Markt erhältlichen Vermittlungssysteme für Paketnetze und deren Elemente basieren auf einer hopby-hop Weiterleitung der Pakete durch die Vermittlungssysteme. Dabei wird umso höherer Verarbeitungsaufwand induziert, je höher die Protokollschicht und deren Komplexität ist, auf der die Entscheidung getroffen wird. In der Regel wird eine Entscheidung auf der Schicht 1 oder Schicht 2 bzw. Layer der Kommunikationsschichten getroffen. Diese Schichten sind in der Regel jedoch abhängig von der speziellen Netzwerktopologie, welche die Vermittlungseinheit miteinander verknüpft. Sie umfassen in der Regel nicht übergreifende Topologien.
Daher wurden in der Vergangenheit vereinfachte Paketweiterleitungsverfahren entwickelt wie MPLS, ATM (siehe entsprechende RFCs) etc., die z. T. auch Topologie übergreifend eingesetzt werden können.
Aufgrund der limitierten Memory-Bandbreiten bestehen die größeren Vermittlungseinheiten aus mehreren Protokollverarbeitungseinheiten, die über Koppeleinheiten (z. B. den oben erwähnten aktiven Crossbar-Backplanes) zusammengebunden werden (vgl. z. B. DE 19935126.0). Die hierzu verwendeten Koppeleinheiten haben aufgrund ihrer einfachen Struktur und der geringen Memory-Größenanforderungen (ermöglicht durch eine Koordinierung der über die Koppeleinheiten laufenden Paketströme) eine sehr hohe Leistungsfähigkeit, die bis in den Terrabit-Bereich geht. Ein entsprechender Aufbau einer Vermittlungsstelle, die eine sehr hohe Leistungsfähigkeit besitzt, ist aus der Druckschrift J Chao: "Saturn: A Terabit Packet Switch Using Dual Round Robin" in IEEE Communications Magazine, Dez. 2000, 5. 78 - 84 zu entnehmen. Dieser Druckschrift ist ein Round-Robin-Verfahren zu entnehmen, nach dem den Eingangsports entsprechende Ausgangsports zugeordnet werden.

Ein wichtiger Grund für die Entwicklung vereinfachter Protokolle wie ATM, MPLS war, die Wegeentscheidung in den Protokollverarbeitungseinheiten zu vereinfachen und abzukürzen. Beim Stand der Technik durchlaufen jedoch bisher die Pakete immer noch dieselben Verarbeitungseinheiten mit der gleichen Anzahl von Protokollverarbeitungseinheiten. In den Protokollverarbeitungseinheiten erfahren unterschiedliche Pakettypen eine unterschiedliche Bearbeitung. In der Regel wird eine Unterscheidung nach Art der Protokolle vorgenommen.

Die begrenzte Bandbreite der Paketpufferspeicher in den Protokollverarbeitungseinheiten begrenzt jedoch weiterhin den Gesamtpaketdurchsatz pro Protokollverarbeitungseinheit. Die entsprechende (in 1. Erwähnte) Zusammenschaltung der Protokollverarbeitungseinheit muss im Bereich der Speicherverwaltung durch ein entsprechendes Zusatzprotokoll zwischen den Bausteinen koordiniert werden (d. h. im Prinzip wird damit ein großer, verteilter, virtueller Gesamtpaketpuffer gebildet, vgl. DE 19935127.9). Dies führt jedoch einerseits zu einem großen Bandbreitenbedarf für diesen zusätzlichen Protokoll-Overhead und andererseits zur Notwendigkeit, in die Protokollverarbeitungseinheit zusätzliche Kommunikationseinheiten für die entsprechenden verteilten Speicherkoordinierungsprotokolle zu integrieren.
Auf der anderen Seite werden die Koppeleinheiten bisher zwar immer leistungsfähiger, aber es existieren nur interne Schnittstellen zu den jeweiligen Protokollverarbeitungseinheiten, in denen jedes Packet eine vollwertige und aufwendige Verarbeitung erfährt.

Aufgabe der Erfindung ist es, eine schnelle und kostengünstigere Vermittlungseinheit bereitzustellen.

Gelöst wird diese Aufgabe durch eine Vorrichtung und ein Verfahren mit den Merkmalen der unabhängigen Ansprüche. Weitere Ausführungsformen und ihre Merkmale sind den Unteransprüchen zu entnehmen.

Der Grundgedanke der Erfindung liegt in der Durchführung einer mindestens zweistufigen Protokollverarbeitung. So weist jeder Port einer Koppeleinheit mindestens eine Protokolleinheit auf, die in der Lage ist, eine einfache Klassifizierung der ankommenden Pakete durchzuführen und einfache Protokolle schnell zu verarbeiten. Weiterhin sind Anschlüsse der Koppeleinheiten vorgesehen, die über ein Netzwerk innerhalb oder außerhalb der Vermittlungseinheit mit einer weiteren Protokolleinheit verbunden sind, die komplexere Analysen für komplexere Protokolle durchführen kann. So werden Pakete, die vereinfachten Protokollkonzepten entsprechen, wie ATM und MPLS, direkt in der Koppeleinheit verarbeitet und sofort wietergeleitet. Zu den komplexeren Protokollverarbeitungseinheiten werden nun nur noch diejenigen Pakete bzw. Informationen über die Pakete über das Netzwerk geleitet, die dort auf den höheren Protokollschichten verarbeitet werden müssen; die entsprechende Paketweiterleitung erfolgt dann mittels der Koppeleinheiten. Die Koppeleinheiten übernehmen auch das Wieterleiten des Paketes, nach dem der Ausgangsport bzw. Zielport durch die Protokolleinheit für komplexe Protokolle festgestellt wurde. Moderne vereinfachte Protokollkonzepte weisen eine strenge Teilung zwischen Steuerung/Signalisierung und Daten-Transport auf (z. B. MPLS mit LPD/RSVP-TE (Internet Draft), (Verfahren zur Initialisierung von MPLS-Pfaden), (I-PoverWDM-Konzepte, vgl. z. B. RFC3031/3032/3034/3035)). Durch die vorliegende Erfindung wird der Daten-Transportaufwand sehr einfach gehalten, der Pufferungsaufwand (Memory und Memory Speed) wird sehr stark limitiert und der Koordinierungsaufwand zwischen verteilten Puffern sehr stark reduziert (mittels Traffic Engineering und Verbindungsannahme/aufbau). Der Steuerungs-/Signalisierungsverkehr kann somit unterschiedlich komplex und im Verarbeitungsaufwand auch von der Lastsituation (Verbindungshaltedauer) abhängig stark variieren und kann trotzdem dynamisch und flexibel behandelt werden.
Aufgrund der neueren Strukturen der Netzwerke erfolgt der Großteil der Paketverarbeitung nicht mehr in den klassischen Protokollverarbeitungseinheiten, sondern es finden zunächst nur noch eine stark vereinfachte, schnelle Klassifizierung und Identifizierung in den internen Koppeleinheiten statt, die sowohl elektrischer als auch optischer Natur sein können. Die bekannten Vermittlungseinheiten werden nur noch in Ausnahmefällen eingesetzt. Somit müssen die Protokollverarbeitungseinheiten nur noch diejenigen Pakete bearbeiten, die für die Signalisierung nötig sind (z. B. Steuerungspakete) und in den Fällen, bei denen eine Bearbeitung auf höherer Ebene nötig ist. Die Koppelmatrix trägt nun den Hauptaufwand der Paketweiterleitung und ist über in der Regel einfachste und standardisierte Interfaces (Point to Point) mit dem Netz verbunden. Hierzu kommen vor allem HDLC ähnliche Protokolle in Frage, wie z. B. das Simple Data Link Protocol (SDL, vgl: Doshi, B. et al. : "A Simple Data Link Protocol for High Speed Packet Networks", Bell Labs Technical Journal, pp. 85-104, Vol.4 Nr.1).
In einer weiteren Ausführungsform sind die Ports mit optischen Leitern verbunden. Bei einem möglichen mehrstufigen Verfahren sind rein optische Lambda-Cross-Connectoren mit/ohne Wellenlängenkonversion mit MPLS/ATM-Kopplern und IP-Router-Engines verbunden. In zukünftigen Ausführungsformen werden für das Routing Netzwerkprozessoren verwendet, die über entsprechende Softwarelösungen an zukünftige komplexere Protokolle anpassbar sind.

Insgesamt führt die Lehre der Erfindung zu geringeren Anforderungen an die Paketverarbeitungsleistung der Gesamtarchitektur. Auf den Gesamtdurchsatz bezogen, wird die vollständige, d. h. auf komplexe Protokolle bezogene, Protokollbearbeitung eine reine Ausnahmebehandlung. Eine flexible Anzahl der Protokollbausteine kann entsprechend den Anforderungen angeschlossen werden. Der Gesamtdurchsatz wird im größeren Maße durch die Koppeleinheiten selbst bestimmt, was zu einer Leistungssteigerung führen kann.

Durch die vorliegende Erfindung wird somit ein vollständig neues Design von Vermittlungseinrichtungen bereitgestellt. Die Koppelbausteine weisen Anschlüsse auf, die die Verbindung zu einem externen Netzwerk ermöglichen, und besitzen an ihren Eingängen Einheiten für eine schnelle Klassifizierung der Datenpakete in solche, die in der Koppeleinheit selbst vollständig weiterverarbeitet werden, und solche, die an die Protokollverarbeitungsbausteine weiterzuleiten sind. Dieses Netzwerk ist lediglich zuständig für die Kommunikation mit den Protokolleinheiten. Es erfolgt somit eine strenge Trennung zwischen Control und Transportdatenverkehr auf der Ebene der Einheiten und Baugruppen.
Die Koppeleinheiten werden mit einer zusätzlichen Logik versehen, die einen Großteil der Entscheidungen übernimmt, die in der Vergangenheit durch Protokolleinheiten übernommen wurden. Lediglich der Fluss von Informationen, die durch komplexere Protokolle gesandt werden, wird durch die bekannten Protokolleinheiten gesteuert. Hierdurch erfolgt ein Verzicht auf die Bearbeitung eines Großteils der Pakete in den Protokollbausteinen. Der Großteil der Paketlast wird bereits auf niedrigster Protokollebene verarbeitet.

Im Folgenden wird anhand von Figuren der mögliche Aufbau einer erfindungsgemäßen Vermittlungseinheit beschrieben. Es zeigt:
- Figur 1: einen detaillierten Aufbau einer Vermittlungseinheit, deren Koppeleinheit über Ports zum externen Netz verfügt, wobei in jedem Port der Koppeleinheit eine Protokolleinheit für weniger komplexe Protokolle implementiert ist, und die Protokollbausteine für komplexere Protokolle, die mit der Koppeleinheit verbunden sind;
- Figur 2: einen detaillierten Aufbau zweier Vermittlungseinheiten, wie sie in Figur 1 dargestellt sind, wobei diese über einen optischen Cross Connector und E/O-Konverter mit einem optischen Netz verbunden sind.

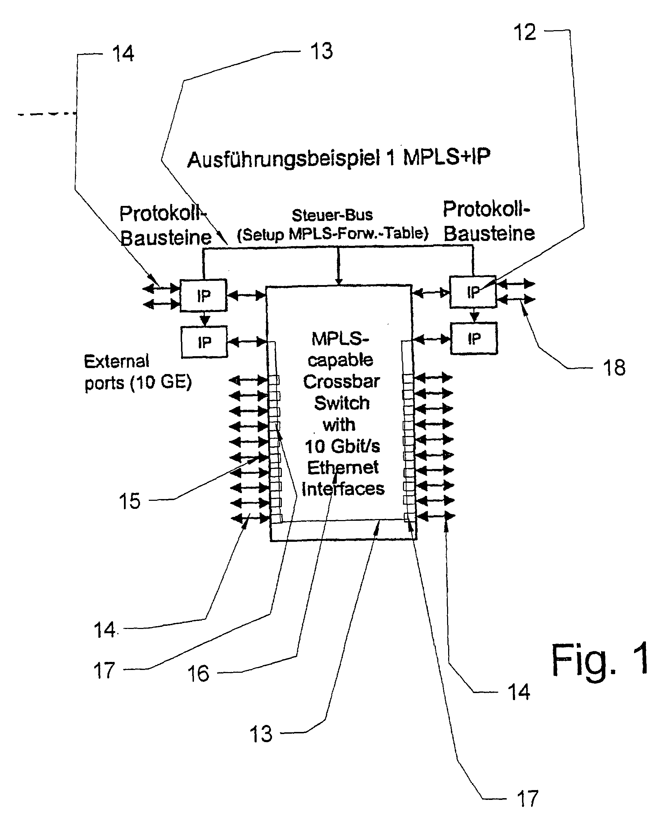

Figur 1 zeigt eine rein elektrische Ausführung der vorliegenden Erfindung. Porteinheiten 14, auch Koppeleinheiten genannt, sind durch 10-Gigabit-Interfaces bzw. Ports 15 mit der Außenwelt, d. h. einem externen Netzwerk 18, direkt verbunden. Innerhalb dieser Porteinheiten wird bereits ein Großteil der Pakete gemäß MPLS weitergeleitet. Die Bearbeitung der Pakete erfolgt durch Protokolleinheiten 17 für weniger komplexe Protokolle. Pakete bzw. ihre Header-Informationen, die eines IP-Routings bedürfen, werden in angeschlossenen Protokollbausteinen 12 bearbeitet und dann erst durch die Koppeleinheiten bzw. Porteinheiten 14 weitergeleitet. Die Verbindung zwischen den einzelnen Protokolleinheiten 12 und 17 wird durch ein Netzwerk 13 sichergestellt, das lediglich zum Austausch von Kontrollinformationen dient. Hier werden Routing-Tabellen und MPLS-Tabellen ausgetauscht. Weiterhin erfolgt eine Kommunikation mit Hilfe der bereits oben beschriebenen Protokolle. In einer weiteren Ausführungsform handelt es sich hierbei um ein hierarchisches Netzwerk, das in Abhängigkeit der zu erwartenden Protokolllast unterschiedliche Ebenen aufweist mit unterschiedlich vielen Protokolleinheiten, die für die entsprechenden Protokolle verantwortlich sind. Die einzelnen Ebenen sind in einem unterschiedlichen Abstand zu den Porteinheiten angeordnet. Die Ebene mit den meisten Protokolleinheiten ist unmittelbar benachbart zu den Porteinheiten angeordnet.

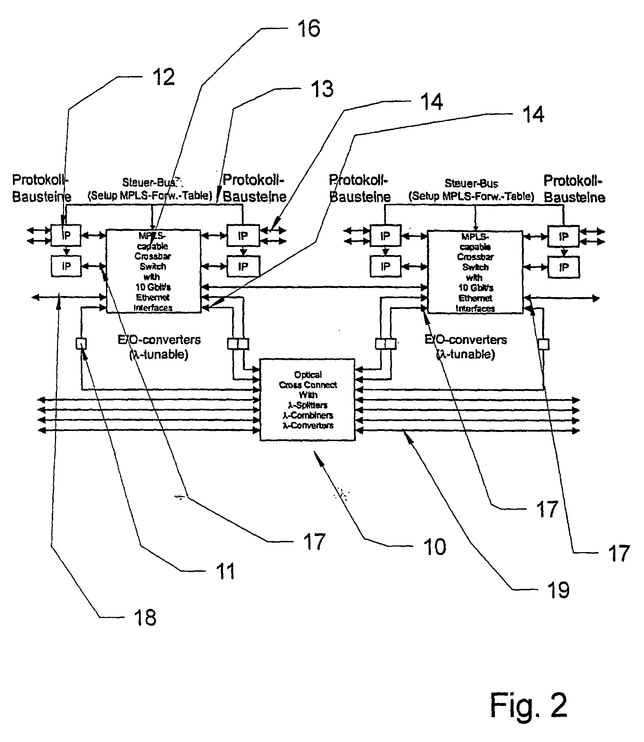

Die Figur 2 zeigt eine Ausführung, die zusätzlich noch auf der Datenweiterleitung durch einen optischen Cross Connect mit Wellenlängen-Konversion (und zusätzlichen wellenlängenabhängigen Splittern Combinern) basiert. Gemäß der Grundkonzepte für das sogenannte Multi-Protocol-Lambda-Switching (vgl. D. Awduche et al.: "Multi-Protocol Lambda Switching: Combining MPLS Traffic Engineering with Optical Cross Connects", Internet Draft, draft-awduche-mpls-te-optical-0 1 .txt) werden länger bestehende und bandbreitenintensive MPLS-Pfade auf eigene Wellenlängen abgebildet, die dann allein im Cross Connector 10 weitergeleitet werden. Einige Wellenlängen sind wie bisher für den klassischen Paketverkehr reserviert. Ihre Bitströme werden optisch-elektrisch gewandelt und dann wie in Figur 1 im MPLS-fähigen Crossbar (und evtl. in den Protokollbausteinen) weiterbearbeitet. Die Verbindung zu den Porteinheiten 14 erfolgt durch einen E/O-Konverter 11.

In einer weiteren nicht dargestellten Ausführungsform wird eine spezielle Analyseeinheit eingesetzt, die die Signale bzw. Informationspakete bereits im Vorfeld analysiert, um festzustellen, um welche Protokolle es sich handelt. Nach dieser Feststellung wird das entsprechende Paket an die entsprechende Protokolleinheit weitergeleitet. In einer besonderen Ausführungsform ist in dieser Analyseeinheit sofort eine Protokolleinheit integriert, die vorzugsweise einfache Protokolle, wie MPLS oder ATM, bearbeiten kann. Hierdurch wird sichergestellt, dass gleichzeitig mit dem Analyseprozess die Informationen gelesen und ausgewertet werden, ohne dass sie ein zweites Mal gelesen werden müssen.

## Patentansprüche

1. Vorrichtung zur Vermittlung einer Mehrzahl von paketorientierten Signalen in Netzwerken (18, 19), insbesondere für das Switching und Routing in den Netzwerken (18, 19),
- mit einer Mehrzahl von Porteinheiten (14), die einen oder mehrere Ports (15) umfassen, wobei die Ports mit den Netzwerken verbindbar sind,
- mit einer Vermittlungseinheit (16), die vorzugsweise die Funktion eines Cross-Schalters aufweist,
- mit mindestens einer ersten Protokolleinheit (12), die zumindest einen Teil der Signale analysiert und deren Bestimmung festlegt,
**dadurch gekennzeichnet, dass**
eine Vielzahl von weiteren Protokolleinheiten (17) vorhanden sind, die den Porteinheiten (14) unmittelbar zugeordnet sind, und die Signale nach ihrem Übertragungsprotokoll klassifizieren, um in Abhängigkeit von dem Übertragungsprotokoll für einen Teil der Pakete die Protokollverarbeitung eigenständig zu übernehmen und für einen anderen Teil die Protokollverarbeitung an die erste Protokolleinheit zu übergeben.

2. Vorrichtung nach dem vorherigen Anspruch, **dadurch gekennzeichnet, dass** die weiteren Protokolleinheiten (17) lediglich Protokolle verarbeiten, für die keine speicherintensiven und/oder zeitintensiven Operationen notwendig sind, um die Bestimmung der Signale zu ermitteln.

3. Vorrichtung nach dem vorherigen Anspruch, **dadurch gekennzeichnet, dass** durch die weiteren Protokolleinheiten (17) lediglich Signale bearbeitet werden, deren Protokoll MPLS und/oder ATM ist.

4. Vorrichtung nach einem oder mehreren der vorhergehenden Ansprüche, **dadurch gekennzeichnet, dass** jeder Porteinheit mindestens eine weitere Protokolleinheit (17) zugeordnet ist.

5. Vorrichtung nach einem oder mehreren der vorhergehenden Ansprüche, **dadurch gekennzeichnet, dass** die Protokolleinheiten (17, 12) jeweils mindestens eine Netzwerkschnittstelle aufweisen, über die die Protokolleinheiten mit einem Netzwerk (13) verbunden sind.

6. Vorrichtung nach einem oder mehreren der vorhergehenden Ansprüche, **dadurch gekennzeichnet, dass** die Protokolleinheiten (17, 12) untereinander Kontrollsignale austauschen, um vorzugsweise Switching oder/und Routing-Informationen bereitzustellen.

7. Vorrichtung nach einem oder mehreren der vorhergehenden Ansprüche, **dadurch gekennzeichnet, dass** die erste Protokolleinheit (12) Signale verarbeitet, die auf der Basis des IP transportiert werden.

8. Vorrichtung nach einem oder mehreren der vorhergehenden Ansprüche, **dadurch gekennzeichnet, dass** zumindest ein Teil der Porteinheiten (14) optisch über einen E/O-Converter (11) mit einem Optical Cross-Connect (10) verbunden ist, um für diesen die Switching- und/oder Routing-Operationen durchzuführen.

9. Verfahren zur Vermittlung einer Mehrzahl von paketorientierten Signalen in Netzwerken, insbesondere für das Switching und Routing in den Netzwerken, mit einer Vorrichtung, insbesondere nach einem oder mehreren der vorhergehenden Ansprüche, die eine Hierarchie von Protokolleinheiten aufweist, wobei in Abhängigkeit der verwendeten Protokolle einzelne Hierarchien der Protokolleinheiten einem Protokoll zugeordnet sind und wobei die Anzahl der Protokolleinheiten in dieser Hierarchie abhängig von der Häufigkeit des verwendeten Protokolls ist,
wobei
in einem ersten Schritt das Signal zur Feststellung des Übertragungsprotokolls analysiert wird, um dann in Abhängigkeit von dem übertragungsprotokoll das Signal einer Protokolleinheit in der zum Protokoll gehörigen Hierarchie zuzuordnen, damit die entsprechende Protokolleinheit die Bestimmung ermittelt, um dann das Signal an die Vermittlungseinheit weiterzuleiten.

## Claims

1. Device for switching a plurality of packet-oriented signals in networks (18, 19), in particular for switching and routing in the networks (18, 19),
- with a plurality of port units (14), which have one or more ports (15), it being possible to connect the ports to the networks,
- with a switching unit (16), which preferably has the function of a cross switch,
- with at least a first protocol unit (12), which analyses at least some of the signals and determines their destination,
**characterised in that**
a plurality of further protocol units (17) are present, which are assigned directly to the port units (14), and classify the signals according to their transmission protocol, in order to take over protocol processing for some of the packets independently as a function of the transmission protocol and to transfer protocol processing to the first protocol unit for other packets.

2. Device according to the preceding Claim,
**characterised in that** the further protocol units (17) only process protocols, for which memory-intensive and/or time-intensive operations are not required in order to determine the destination of the signals.

3. Device according to the preceding Claim,
**characterised in that** only signals with the MPLS and/or ATM protocol are processed by the further protocol units (17).

4. Device according to one or a plurality of the preceding Claims,
**characterised in that** at least one further protocol unit (17) is assigned to each port unit.

5. Device according to one or a plurality of the preceding Claims,
**characterised in that** the protocol units (17, 12) each have at least one network interface, via which the protocol units are connected to a network (13).

6. Device according to one or a plurality of the preceding Claims,
**characterised in that** the protocol units (17, 12) exchange control signals with each other preferably to supply switching and/or routing information.

7. Device according to one or a plurality of the preceding Claims,
**characterised in that** the first protocol unit (12) processes signals, which are transported on the basis of the IP.

8. Device according to one or a plurality of the preceding Claims,
**characterised in that** at least some of the port units (14) are connected optically via an E/O converter (11) to an optical cross connect (10) to implement the switching and/or routing operations for these.

9. Method for switching a plurality of packet-oriented signals in networks, in particular for switching and routing in the networks, with a device in particular according to one or a plurality of the preceding Claims, having a hierarchy of protocol units, with individual hierarchies of the protocol units being assigned to a protocol as a function of the protocols used and the number of protocol units in said hierarchy being a function of the frequency of the protocol used,
in which
in a first step the signal is analysed to determine the transmission protocol, in order then to assign the signal to a protocol unit in the hierarchy associated with the protocol as a function of the transmission protocol, so that the corresponding protocol unit determines the destination in order then to forward the signal to the switching unit.

## Revendications

1. Dispositif pour transmettre une pluralité de signaux en mode paquet dans des réseaux (18, 19), en particulier pour la commutation et le routage dans les réseaux (18, 19), comprenant
- une pluralité d'unités de port (14), qui comprennent un ou plusieurs ports (15), les ports pouvant être reliés au réseau,
- une unité de commutation (16), qui présente de préférence la fonction d'un connecteur croisé,
- au moins une première unité de protocole (12), qui analyse au moins une partie des signaux et fixe leur détermination,
**caractérisé en ce qu'**une pluralité d'autres unités de protocole (17) sont présentes, lesquelles sont attribuées directement aux unités de port (14), et classifient les signaux selon leur protocole de transmission afin de prendre en charge de façon autonome le traitement du protocole en fonction du protocole de transmission pour une partie des paquets et pour transmettre pour une autre partie le traitement du protocole à la première unité de protocole.

2. Dispositif selon la revendication précédente, **caractérisé en ce que** les autres unités de protocole (17) traitent uniquement des protocoles pour lesquels il n'est pas nécessaire d'effectuer des opérations intensives en mémoire et/ou intensives en temps pour déterminer le calcul des signaux.

3. Dispositif selon la revendication précédente, **caractérisé en ce que** les autres unités de protocole (17) traitent uniquement des signaux dont le protocole est MPLS et/ou ATM.

4. Dispositif selon l'une quelconque ou plusieurs des revendications précédentes, **caractérisé en ce qu'**au moins une autre unité de protocole (17) est attribuée à chaque unité de port.

5. Dispositif selon l'une quelconque ou plusieurs des revendications précédentes, **caractérisé en ce que** les unités de protocole (17, 12) présentent respectivement au moins une interface de réseau par laquelle les unités de protocole sont reliées à un réseau (13).

6. Dispositif selon l'une quelconque ou plusieurs des revendications précédentes, **caractérisé en ce que** les unités de protocole (17, 12) échangent entre elles des signaux de contrôle, afin de mettre à disposition de préférence des informations de commutation et/ou de routage.

7. Dispositif selon l'une quelconque ou plusieurs des revendications précédentes, **caractérisé en ce que** la première unité de protocole (12) traite des signaux qui sont transportés sur la base du IP.

8. Dispositif selon l'une quelconque ou plusieurs des revendications précédentes, **caractérisé en ce que** au moins une partie des unités de port (14) est reliée visuellement au moyen d'un convertisseur E/O (11) à une connexion croisée (10) optique, afin d'effectuer pour celui-ci des opérations de commutation et/ou de routage.

9. Procédé pour transmettre une pluralité de signaux en mode paquet dans des réseaux, en particulier pour la commutation et le routage dans les réseaux, avec un dispositif, en particulier selon l'une ou plusieurs des revendications précédentes, qui présentent une hiérarchie d'unités de protocole, certaines hiérarchies des unités de protocole étant attribuées à un protocole en fonction du protocole utilisé et le nombre des unités de protocole dans cette hiérarchie étant dépendant de la fréquence du protocole utilisé, le signal étant analysé dans une première étape pour la détermination du protocole de transmission, afin d'attribuer ensuite, en fonction du protocole de transmission, le signal à une unité de protocole dans la hiérarchie faisant partie du protocole, pour que l'unité de protocole correspondante détermine le calcul pour transmettre ensuite le signal à l'unité de commutation.
